# EUROPEAN PATENT SPECIFICATION

(11) **EP 4 214 412 B1**
(45) Date of publication and mention of the grant of the patent: **06.11.2024**
(21) Application number: 20962718.1
(22) Date of filing: 25.11.2020
(51) Int. Cl.: F03D 1/06, F03D 13/10

(54) **JOINT FOR SEGMENTED WIND TURBINE BLADE, SEGMENTED WIND TURBINE BLADE AND METHOD FOR MANUFACTURING THE SAME**
VERBINDUNG FÜR SEGMENTIERTE WINDTURBINENSCHAUFEL, SEGMENTIERTE WINDTURBINENSCHAUFEL UND VERFAHREN ZUR HERSTELLUNG DAVON
JOINT POUR PALE D'ÉOLIENNE SEGMENTÉE, PALE D'ÉOLIENNE SEGMENTÉE ET PROCÉDÉ DE FABRICATION ASSOCIÉ

(43) Date of publication of application: 26.07.2023
(73) Proprietor: Shanghai Electric Wind Power Group Co., Ltd., Shanghai 200241 (CN)
(72) Inventor: DAMGAARD, Brian Baekdahl, Shanghai 200241 (CN); DATTA, Vasu, Shanghai 200241 (CN); FUKAMI, Koji, Shanghai 200241 (CN); ANDERSEN, Peter Bjorn, Shanghai 200241 (CN)
(74) Representative: Dai, Simin
(86) International application number: PCT/CN2020/131322
(87) International publication number: WO 2022/109827

(56) References cited:
- WO-A1-2020/068543
- CN-A- 1 977 108
- CN-A- 101 614 184
- CN-A- 105 526 044
- CN-A- 106 121 935
- CN-U- 211 549 890
- DE-B4- 102010 015 392
- DE-B4- 102010 015 392
- US-A1- 2008 069 699
- US-A1- 2020 095 976

## Description

### TECHNICAL FIELD

The present disclosure relates generally to wind turbines and more particularly to a joint for a segmented wind turbine blade, a segmented wind turbine blade and a method for manufacturing the same.

### BACKGROUND

Modern wind turbines continue to grow in size and be equipped with increasingly long wind turbine blades in order to increase the power production. As the blades get longer, transportation of such blades can be challenging or even impossible in some regions of the world. Navigating in complex terrain and in regions with poor infrastructure poses a challenge for transporting the long blades by road, and in some cases, there is a limit to the length of a blade that can be transported to the wind turbine site. A way of solving this challenge is by blade segmentation, whereby the blade is transported in two or more segments, and is later assembled on-site. A segmented blade offers several additional benefits. The investment into manufacturing assets for producing very long blades can be reduced and transportation cost can be reduced. Hence segmented blades have the potential of bringing sustainable clean wind energy to regions that would otherwise not be a possibility, and improve the business case and economic performance of wind farms located in areas where transportation is challenging.

A segmented blade can be joined or assembled in various different ways, such as by means of bolted joint connections, adhesive joints, joining by lamination etc. These methods of joining are well known and proven from many applications in e.g. automotive, aerospace, and even within wind turbine blade design. However, implementation of these joining strategies are not well proven, and are not widespread in the application of segmented blades. This is strongly influenced from the fact that, although segmented blade concepts have existed in theory for decades, actual implementation and industrialization is limited within the wind industry. The increased technical complexity and derived cost increase of the blade has historically not favoured segmented blade design. But as the development of ever increasing rotor size for wind turbines in complex terrain is accelerating, this picture is starting to change. The need for segmented blades is emerging rapidly, having positive impact on the economy of certain wind projects. Hence, development and application of mechanical joints for segmented blades are an emerging technology, where mechanical joint technologies will be applied in new and innovative solutions.

An example of a prior art system can be found in DE 10 2010 015392 B4.

### SUMMARY

Some embodiments of the present invention provide a joint for a segmented wind turbine blade, a segmented wind turbine blade and a method for manufacturing a segmented wind turbine blade.

In one aspect, a joint for a segmented wind turbine blade is provided. The joint comprises a laminate glove integrally formed on a first blade segment of the segmented wind turbine blade, and a protruding laminate integrally formed on a second blade segment of the segmented wind turbine blade. The laminate glove is configured for housing the protruding laminate, and when the segmented wind turbine blade is assembled on-site, the laminate glove and the protruding laminate are connected together so that the first blade segment is assembled with the second blade segment.
In a particular embodiment, the laminate glove has an outer glove laminate and an inner glove laminate, and the protruding laminate is located between the outer glove laminate and the inner glove laminate.
In a particular embodiment, the protruding laminate is tapered in a spanwise direction of the segmented wind turbine blade, and the outer glove laminate and the inner glove laminate form a tapered glove opening for housing the tapered protruding laminate.
In a particular embodiment, the joint comprises the laminate gloves respectively formed on a suction side and a pressure side of the first blade segment, and the protruding laminates respectively formed on a suction side and a pressure side of the second blade segment, and wherein the laminate glove on the suction side is configured for housing the protruding laminate on the suction side, and the laminate glove on the pressure side is configured for housing the protruding laminate on the pressure side.
In a particular embodiment, the laminate glove and the protruding laminate are connected by adhesive or resin; or the laminate glove and the protruding laminate are connected by mechanical fasteners.

In another aspect, a segmented wind turbine blade is provided. The segmented wind turbine blade comprises at least two blade segments and one or more joints. The at least two blade segments comprises a first blade segment and a second blade segment. The one or more joints are configured for connecting the first blade segment and the second blade segment. Each of the one or more joints comprises a laminate glove integrally formed on the first blade segment, and a protruding laminate integrally formed on the second blade segment. The protruding laminate is housed in and connected with the laminate glove so that the first blade segment and the second blade segment are assembled together.
In a particular embodiment, the joint is positioned at any given desired spanwise location of the segmented wind turbine blade; or the joint is positioned at any given desired chordwise location of the segmented wind turbine blade; or the joint is positioned in any given desired orientation in a cross section of the segmented wind turbine blade.

In still another aspect, a method for manufacturing a segmented wind turbine blade is provided. The segmented wind turbine blade at least comprising a first blade segment and a second blade segment. The method comprises steps of: laying up one or more material layers in a blade mold, the one or more material layers comprising a laminate glove of the first blade segment and a protruding laminate of the second blade segment, the laminate glove housing the protruding laminate; co-infusing the one or more material layers together in the blade mold so as to form a single-piece wind turbine blade; demolding the single-piece wind turbine blade from the blade mold; and separating the laminate glove from the protruding laminate to form the first blade segment with the laminate glove and the second blade segment with the protruding laminate so that the segmented wind turbine blade is formed, and the first blade segment and the second blade segment are able to be reassembled together by connection of the laminate glove and the protruding laminate when the segmented wind turbine blade is assembled on-site.
In a particular embodiment, the laminate glove has an outer glove laminate and an inner glove laminate, and the protruding laminate is located between the outer glove laminate and the inner glove laminate.
In a particular embodiment, the laying up the one or more material layers comprises: wrapping the inner glove laminate onto the protruding laminate prior to co-infusion.
In a particular embodiment, the method further comprising adding between the laminate glove and the protruding laminate, a processing material for facilitating disassembly of the laminate glove and the protruding laminate during laying up the one or more material layers; or adding between the laminate glove and the protruding laminate, a processing material for facilitating disassembly of the laminate glove and the protruding laminate during laying up the one or more material layers, and covering the protruding laminate with the processing material.
In a particular embodiment, the method further comprising removing the processing material from the protruding laminate before re-assembly.
In a particular embodiment, the blade mold comprises two mold halves, and the laying up the one or more material layers in the blade mold and the co-infusing the one or more material layers together in the blade mold comprises: laying up and co-infusing the one or more material layers respectively in the two mold halves so as to form a suction side blade shell and a pressure side blade shell respectively, wherein the laminate glove and the protruding laminate are placed in each of the two mold halves.
In a particular embodiment, the method further comprising: closing the two mold halves; and assembling the suction side blade shell and the pressure side blade shell together to form the single-piece wind turbine blade.
In a particular embodiment, the co-infusing the one or more material layers together in the blade mold comprises: co-infusing the one or more material layers together with a liquid resin in the blade mold so as to cure the one or more material layers.

### BRIEF DESCRIPTION OF THE DRAWINGS

To describe the technical solutions in embodiments of the present disclosure more clearly, drawings in descriptions of the embodiments of the present disclosure will be briefly introduced below. It is apparent that the drawings described below are merely some embodiments of the present disclosure and other drawings may be obtained by those of ordinary skill in the art based on these drawings without resorting to creative labor.
FIG. 1 illustrates a schematic view of a segmented wind turbine blade according to one embodiment of the present disclosure.
FIG. 2 illustrates a cross-sectional view of the segmented wind turbine blade of FIG. 1 taken along line A-A.
FIG. 3 illustrates a cross-sectional view of the segmented wind turbine blade of FIG. 1 taken along line B-B.
FIG. 4 illustrates a schematic view of a portion of a first blade segment of one embodiment according to the present disclosure.
FIG. 5 illustrates a schematic view of a second blade segment according to one embodiment of the present disclosure.
FIG. 6 is a flow chart of a method for manufacturing a segmented wind turbine blade according to one embodiment of the present disclosure.

### DETAILED DESCRIPTION OF THE EMBODIMENTS

The technical solutions of embodiments of the present disclosure will be described clearly and fully below in combination with drawings in the embodiments of the present disclosure. It is apparent that the described embodiments are merely part of embodiments of the present disclosure rather than all the embodiments. Other embodiments achieved by those of ordinary skill in the art based on the embodiments in the present disclosure without paying creative labor shall all fall within the protective scope of the present disclosure.

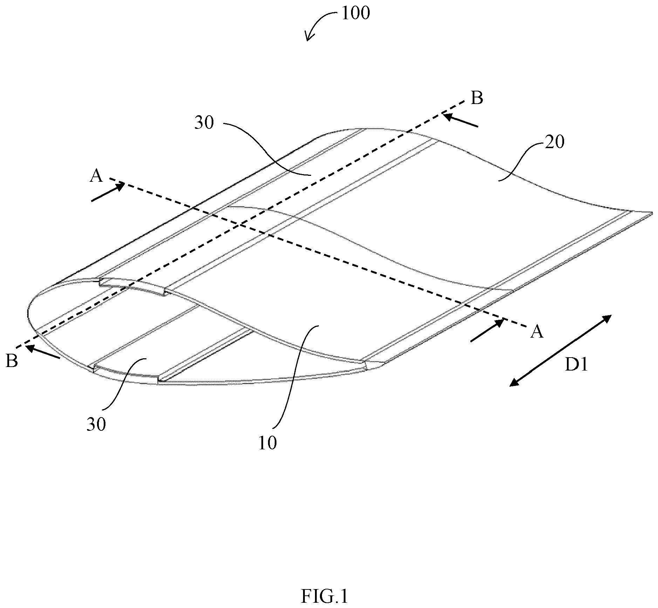

FIG. 1 illustrates a schematic view of a segmented wind turbine blade 100 according to one embodiment of the present disclosure. Referring now to FIG. 1, the segmented wind turbine blade 100 according to one embodiment of the present disclosure may include at least two blade segments and one or more joints 30 for connecting the at least two blade segments. The at least two blade segments may include for example, but be not limited to a first blade segment 10 and a second blade segment 20. The one or more joints 30 is used for the segmented wind turbine blade 100 and is configured for connecting the first blade segment 10 and the second blade segment 20. Thus, by the one or more joints 30, the first blade segment 10 and the second blade segment 20 of the segmented wind turbine blade 100 can be assembled together, thereby enabling transportation of the wind turbine blade 100 in segments, and for the segments to be assembled on-site.

The first blade segment 10 of the segmented wind turbine blade 100 includes one of a blade root segment and a blade tip segment, and the second blade segment 20 of the segmented wind turbine blade 100 includes the other of the blade root segment and the blade tip segment. For example, in one embodiment, the first blade segment 10 may include a blade root segment, and the second blade segment 20 may include a blade tip segment. In another embodiment, the first blade segment 10 may include the blade tip segment, and the second blade segment 20 may include the blade root segment.

However, it is noted that the segmented wind turbine blade 100 of the present disclosure should be not limited to include only two blade segments. In other embodiments, the segmented wind turbine blade 100 of the present disclosure may also include three, four or even more blade segments. The number of the segmented wind turbine blade 100 of the present disclosure may vary from two to any desired number. Furthermore, the segmented wind turbine blade 100 of the present disclosure should be not limited to include the blade root segment and the blade tip segment. In other embodiments, the segmented wind turbine blade 100 of the present disclosure may also include one or more medium blade segments located between the blade root segment and the blade tip segment.

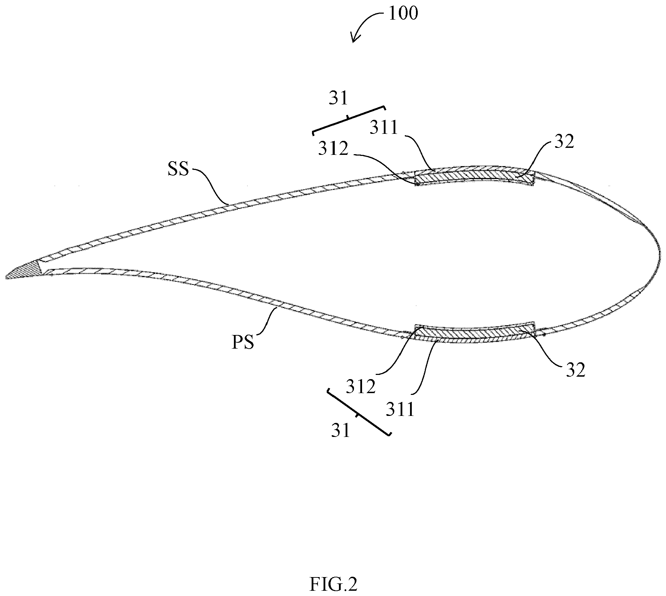

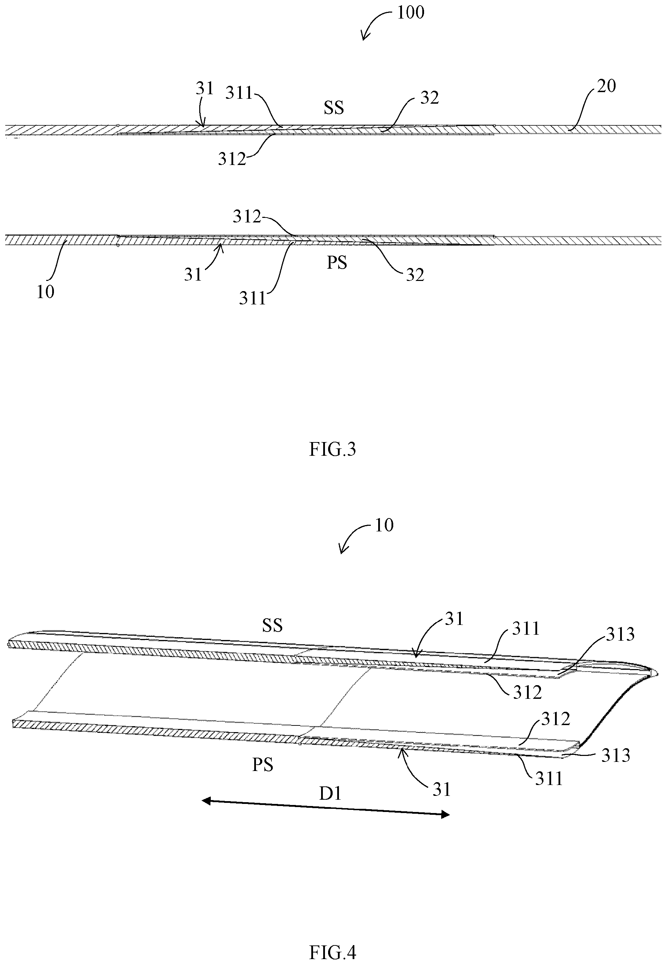

FIG. 2 illustrates a cross-sectional view of the segmented wind turbine blade 100 of FIG. 1 taken along line A-A. FIG. 3 illustrates a cross-sectional view of the segmented wind turbine blade 100 of FIG. 1 taken along line B-B. As shown in FIG. 2 and FIG. 3, each joint 30 may include a laminate glove 31 and a protruding laminate 32. The laminate glove 31 is configured for housing the protruding laminate 32. The laminate glove 31 has the size and the shape so to fit the protruding laminate 32. In one embodiment, the laminate glove 31 and the protruding laminate 32 of the joint 30 are co-infused during manufacturing of the segmented wind turbine blade 100.

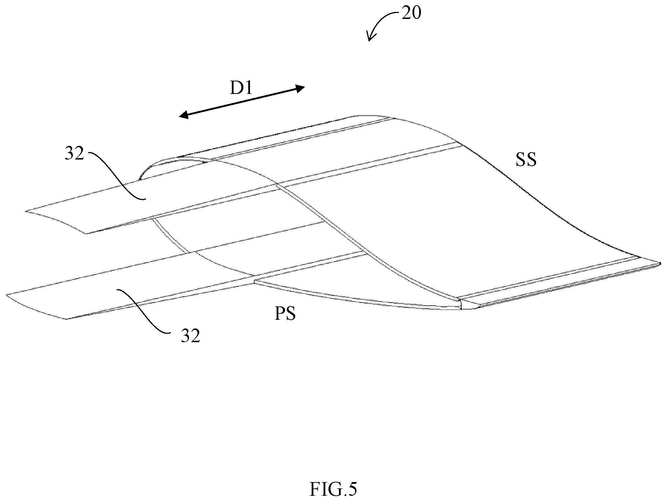

FIG. 4 illustrates a schematic view of a portion of a first blade segment 10 of one embodiment according to the present disclosure. As shown in FIG. 4, the laminate glove 31 of the joint 30 is integrally formed on the first blade segment 10 of the segmented wind turbine blade 100. The laminate glove 31 is as an integral part of the first blade segment 10. FIG. 5 illustrates a schematic view of a second blade segment 20 according to one embodiment of the present disclosure. As shown in FIG. 5, the protruding laminate 32 of the joint 30 is integrally formed on the second blade segment 20 of the segmented wind turbine blade 100. The protruding laminate 32 is as an integral part of the second blade segment 20.

When the segmented wind turbine blade 100 is required to be assembled on-site, the laminate glove 31 may house the protruding laminate 32 and the laminate glove 31 and the protruding laminate 32 may be connected together by various connecting methods so that the first blade segment 10 is assembled with the second blade segment 20. The joint 30 of the present disclosure may realize disassembly for transportation of the wind turbine blade 100 and re-assembly on-site for installation.

Referring now to FIGS. 2-5, in some embodiments, the laminate glove 31 of the joint 30 may have an outer glove laminate 311 and an inner glove laminate 312. The protruding laminate 32 of the joint 30 may be located between the outer glove laminate 311 and the inner glove laminate 312 of the laminate glove 31. Therefore, the protruding laminate 32 may be housed in the laminate glove 31. When re-assembly, in one embodiment, the laminate glove 31 and the protruding laminate 32 may be connected together by adhesive or resin. The adhesive or the resin may act as a load transferring mechanism between the laminate glove 31 and the protruding laminate 32. In another embodiment, the laminate glove 31 and the protruding laminate 32 may define one or more holes (not shown) for mechanical fasteners, and the laminate glove 31 and the protruding laminate 32 may be connected together by the mechanical fasteners.

In some embodiment, the protruding laminate 32 is tapered in a spanwise direction D1 of the segmented wind turbine blade 100, and correspondingly, the outer glove laminate 311 and the inner glove laminate 312 of the laminate glove 31 form a tapered glove opening 313 for housing the tapered protruding laminate 32. Such a tapered mating structure of the laminate glove 31 and the protruding laminate 32 can facilitate disassembly of the laminate glove 31 and the protruding laminate 32.

In some embodiment, the segmented wind turbine blade 100 may include the one or more joints 30 on a suction side (SS) and the one or more joints 30 on a pressure side (PS). In the figures of the present disclosure, one joint 30 on the suction side and one joint 30 on the pressure side are shown as an example. Each joint 30 on the suction side includes the laminate glove 31 formed on a suction side of the first blade segment 10 and the protruding laminate 32 formed on a suction side of the second blade segment 20. The laminate glove 31 on the suction side is configured for housing the protruding laminate 32 on the suction side so as to create a load transferring joint connecting the first blade segment 10 and the second blade segment 20 on the suction side. Each joint 30 on the pressure side includes the laminate glove 31 formed on the pressure side of the first blade segment 10 and the protruding laminate 32 formed on the pressure side of the second blade segment 20. The laminate glove 31 on the pressure side is configured for housing the protruding laminate 32 on the pressure side so as to create a load transferring joint connecting the first blade segment 10 and the second blade segment 20 on the pressure side.

The joint 30, i.e. the laminate glove 31 and the corresponding protruding laminate 32 may be positioned at any given desired spanwise location of the segmented wind turbine blade 100, and the joint 30 may be positioned at any given desired chordwise location of the segmented wind turbine blade 100. The joint 30 may also be positioned in any given desired orientation in a cross section of the segmented wind turbine blade 100. The segmented wind turbine blade 100 may include a plurality of joints 30 in a cross-section. The plurality of joints 30 may be positioned in any desired pattern or spacing sequence in a given cross section. That is to say, the first blade segment 10 may include one or more laminate gloves 31, and the second blade segment 20 may include one or more corresponding protruding laminates 32.

The segmented wind turbine blade 100 of the present disclosure adopts the joint 30 with the laminate glove 31 fitting the protruding laminate 32 and may be thus disassembled for transportation and re-assembled on-site for installation.

The segmented wind turbine blade 100 of the present disclosure is completely scalable in the number of connections per joint 30. The segmented wind turbine blade 100 of the present disclosure is completely scalable in dimensions, positioning, and orientation.

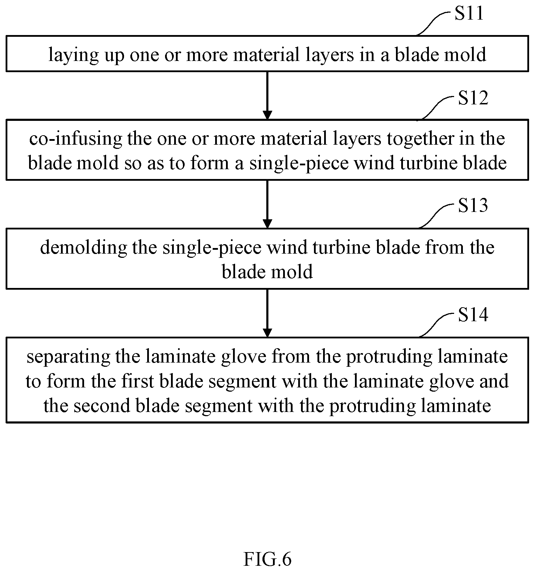

The present disclosure further provides a method for manufacturing the segmented wind turbine blade 100 above-mentioned. FIG. 6 illustrates a flow chart of a method for manufacturing the segmented wind turbine blade 100 according to one embodiment of the present disclosure. As described above, the segmented wind turbine blade 100 at least includes the first blade segment 10 and the second blade segment 20. As shown in FIG. 6, a method for manufacturing the segmented wind turbine blade 100 according to one embodiment of the present disclosure may include steps S11 to S14.

In step S11, one or more material layers are laid up in a blade mold. The one or more material layers include the laminate glove 31 of the first blade segment 10 and the protruding laminate 32 of the second blade segment 20. The laminate glove 31 of the first blade segment 10 houses the protruding laminate 32 of the second blade segment 20.

The one or more material layers may include one or more fiber layers. The one or more fiber layers may include at least one of glass fiber layers and carbon fiber layers. Optionally, the one or more material layers may further include one or more core material layers made of polymer foam or balsa wood.

In step S12, the one or more material layers are co-infused together in the blade mold so as to form a single-piece wind turbine blade 100. For example, the one or more material layers are co-infused together with a liquid resin in the blade mold so as to cure the one or more material layers.

In step S13, the single-piece wind turbine blade 100 is demolded from the blade mold.

In step S14, the laminate glove 31 is separated from the protruding laminate 32 to form the first blade segment 10 with the laminate glove 31 and the second blade segment 20 with the protruding laminate 32 so that the segmented wind turbine blade 100 is formed, and the first blade segment 10 and the second blade segment 20 are able to be reassembled together by connection of the laminate glove 31 and the protruding laminate 32 when the segmented wind turbine blade 100 is assembled on-site.

The method of the present disclosure may manufacture the segmented wind turbine blade 100 in a non-segmented blade mold with the co-infused laminate glove 31 fitting the protruding laminate 32, which can be subsequently disassembled for transportation and re-assembled on-site for installation.

By manufacturing the segmented wind turbine blade 100 in a non-segmented blade mold, the method of the present disclosure enables a unique elimination of tolerance chains, elsewhere causing difficulties of aligning segments for assembly on-site.

The method of the present disclosure does not incur additional capital expenditures on manufacturing as the non-segmented blade mold is utilized.

In some embodiment, the laminate glove 31 has an outer glove laminate 311 and an inner glove laminate 312 as shown in FIGS. 3 and 4, and the protruding laminate 32 is located between the outer glove laminate 311 and the inner glove laminate 312. Thus, the laying up the one or more material layers of step S11 may include: wrapping the inner glove laminate 312 onto the protruding laminate 32 prior to co-infusion.

The laminate glove 31 and the protruding laminate 32 are co-infused in the blade mold. The laminate glove 31 and the protruding laminate 32 are processed in such a specific way, which enables disassembly of the two elements subsequent to demolding, and for re-assembly after transportation to the wind farm site. Thus, the method of the present disclosure may further include: adding between the laminate glove 31 and the protruding laminate 32, a processing material for facilitating disassembly of the laminate glove 31 and the protruding laminate 32 during laying up the one or more material layers of step S11. In an optional embodiment, the adding the processing material between the laminate glove 31 and the protruding laminate 32 may include: covering the protruding laminate 32 with the processing material.

The processing material of the present disclosure may have the characteristics of surface tension and bonding characteristics, which enables disassembly of the protruding laminate 32 and the laminate glove 31. Hence making possible for having such the segmented wind turbine blade 100, which can be re-assembled. For example, the processing material may include Teflon.

In some embodiments, the method of the present disclosure may further include: removing the processing material from the protruding laminate 32 before re-assembly.

In one embodiment, the blade mold for manufacturing the segmented wind turbine blade 100 according to the present disclosure may include two mold halves. Thus, in step S11 and step S12, the one or more material layers may be laid up and co-infused respectively in the two mold halves so as to form a suction side blade shell and a pressure side blade shell respectively. The laminate glove 31 and the protruding laminate 32 are placed in each of the two mold halves. Therefore, the laminate glove 31 and the corresponding protruding laminate 32 on the suction side, as well as the laminate glove 31 and the corresponding protruding laminate 32 on the pressure side are formed.

In this case, the method of the present disclosure may further include: closing the two mold halves; and assembling the suction side blade shell and the pressure side blade shell together to form the single-piece wind turbine blade 100.

The method of the present disclosure can manufacture the segmented wind turbine blade 100 in a blade mold in a single piece, and can be demolded in a single piece. Thus, the method of the present disclosure has a lower manufacturing cost.

In the descriptions of the present specification, terms such as "an example", "some examples", "illustrative examples", "embodiments", "a specific example" or "some examples" are intended to refer to that a specific feature, structure, material, or characteristic described in combination with an embodiment or an example are included in at least one embodiment or example of the present disclosure. In the present specification, the illustrative expressions of the above terms do not necessarily refer to a same embodiment or example. Further, specific feature, structure, material or characteristic described above may be combined in a proper way in one or more embodiments or examples.

## Claims

1. A joint (30) for a segmented wind turbine blade (100), comprising:
one or more scarfed laminate gloves (31) integrally formed on a first blade segment (10) of the segmented wind turbine blade, wherein the one or more scarfed laminate gloves (30) are arranged along a chordwise direction of the first blade segment (10), and the one or more scarfed laminate gloves (30) are inside the first blade segment (10); and
one or more scarfed protruding laminates (32) integrally formed on a second blade segment (20) of the segmented wind turbine blade, wherein the one or more scarfed protruding laminates (32) are arranged along the chordwise direction of the second blade segment (20), and the one or more scarfed protruding laminates (32) protrude from the second blade segment (20),
wherein the one or more scarfed laminate gloves are configured for housing the one or more scarfed protruding laminates, and when the segmented wind turbine blade is assembled on-site, the one or more scarfed laminate gloves and the one or more scarfed protruding laminates are connected together so that the first blade segment is assembled with the second blade segment.

2. The joint according to claim 1, wherein each of the one or more scarfed laminate gloves has an outer glove laminate (311) and an inner glove laminate (312), and each of the one or more scarfed protruding laminates is located between the outer glove laminate and the inner glove laminate.

3. The joint according to claim 2, wherein each of the one or more scarfed protruding laminates is tapered in a spanwise direction (D1) of the segmented wind turbine blade, and the outer glove laminate and the inner glove laminate form a tapered glove opening (313) for housing the tapered protruding laminate.

4. The joint according to claim 1, wherein the joint comprises two of the one or more scarfed laminate gloves respectively formed on a suction side (SS) and a pressure side (PS) of the first blade segment, and two of the one or more scarfed protruding laminates respectively formed on a suction side (SS) and a pressure side (PS) of the second blade segment, and
wherein the one or more scarfed laminate gloves on the suction side are configured for housing the one or more scarfed protruding laminates on the suction side, and the one or more scarfed laminate gloves on the pressure side are configured for housing the one or more scarfed protruding laminates on the pressure side.

5. The joint according to claim 1, wherein the one or more scarfed laminate gloves and the one or more scarfed protruding laminates are connected by adhesive or resin ; or the one or more scarfed laminate gloves and the one or more scarfed protruding laminates are connected by mechanical fasteners.

6. A segmented wind turbine blade (100), comprising:
at least two blade segments comprising a first blade segment (10) and a second blade segment (20); and
one or more joints (30) for connecting the first blade segment and the second blade segment according to any one of claims 1-5.

7. The segmented wind turbine blade according to claim 6, wherein the joint is positioned at any given desired spanwise location of the segmented wind turbine blade; or
the joint is positioned at any given desired chordwise location of the segmented wind turbine blade; or the joint is positioned in any given desired orientation in a cross section of the segmented wind turbine blade.

8. A method for manufacturing a segmented wind turbine blade (100), the segmented wind turbine blade at least comprising a first blade segment (10) and a second blade segment (20), the method comprising steps of:
laying up (S11) one or more material layers in a blade mold, the one or more material layers comprising one or more scarfed laminate gloves (31) of the first blade segment and one or more scarfed protruding laminates (32) of the second blade segment, the one or more scarfed laminate gloves housing the one or more scarfed protruding laminates, wherein the one or more scarfed laminate gloves (30) are arranged along a chordwise direction of the first blade segment (10), and the one or more scarfed laminate gloves (30) are inside the first blade segment (10), and the one or more scarfed protruding laminates (32) are arranged along the chordwise direction of the second blade segment (20), and the one or more scarfed protruding laminates (32) protrude from the second blade segment (20);
co-infusing (S12) the one or more material layers together in the blade mold so as to form a single-piece wind turbine blade;
demolding (S13) the single-piece wind turbine blade from the blade mold; and
separating (S14) the one or more scarfed laminate gloves from the one or more scarfed protruding laminates to form the first blade segment with the one or more scarfed laminate gloves and the second blade segment with the one or more scarfed protruding laminates so that the segmented wind turbine blade is formed, and the first blade segment and the second blade segment are able to be reassembled together by connection of the one or more scarfed laminate gloves and the one or more scarfed protruding laminates when the segmented wind turbine blade is assembled on-site.

9. The method according to claim 8, wherein each of the one or more scarfed laminate gloves has an outer glove laminate (311) and an inner glove laminate (312), and each of the one or more scarfed protruding laminates is located between the outer glove laminate and the inner glove laminate.

10. The method according to claim 9, wherein the laying up (S11) the one or more material layers comprises:
wrapping the inner glove laminate (312) onto each of the one or more scarfed protruding laminates (32) prior to co-infusion.

11. The method according to claim 8, further comprising:
adding between each of the one or more scarfed laminate gloves (31) and each of the one or more scarfed protruding laminates (32), a processing material for facilitating disassembly of the one or more scarfed laminate gloves and the one or more scarfed protruding laminates during laying up the one or more material layers; or
adding between each of the one or more scarfed laminate gloves (31) and each of the one or more scarfed protruding laminates (32), a processing material for facilitating disassembly of the one or more scarfed laminate gloves and the one or more scarfed protruding laminates during laying up the one or more material layers, and covering each of the one or more scarfed protruding laminates with the processing material.

12. The method according to claim 11, further comprising:
removing the processing material from each of the one or more scarfed protruding laminates (32) before re-assembly.

13. The method according to claim 8, wherein the blade mold comprises two mold halves, and the laying up the one or more material layers in the blade mold and the co-infusing the one or more material layers together in the blade mold comprises:
laying up and co-infusing the one or more material layers respectively in the two mold halves so as to form a suction side blade shell and a pressure side blade shell respectively, wherein the one or more scarfed laminate gloves and the one or more scarfed protruding laminates are placed in each of the two mold halves.

14. The method according to claim 13, further comprising:
closing the two mold halves; and
assembling the suction side blade shell and the pressure side blade shell together to form the single-piece wind turbine blade.

15. The method according to claim 8, wherein the co-infusing the one or more material layers together in the blade mold comprises:
co-infusing the one or more material layers together with a liquid resin in the blade mold so as to cure the one or more material layers.

## Patentansprüche

1. Gelenk (30) für ein segmentiertes Windturbinenblatt (100), umfassend:
einen oder mehrere abgeschrägte Laminatschuhe (31), die integral auf einen ersten Blattsegment (10) des segmentierten Windturbinenblatts ausgebildet sind, wobei die einen oder mehrere abgeschrägten Laminatschuhe (30) entlang einer Sehnenrichtung des ersten Blattsegments (10) angeordnet sind und sich die einen oder mehrere abgeschrägten Laminatschuhe (30) innerhalb des ersten Blattsegments (10) befinden; und
eine oder mehrere abgeschrägte hervorstehende Laminate (32), die integral auf einen zweiten Blattsegment (20) des segmentierten Windturbinenblatts ausgebildet sind, wobei die einen oder mehrere abgeschrägten hervorstehenden Laminate (32) entlang der Sehnenrichtung des zweiten Blattsegments (20) angeordnet sind und die einen oder mehrere abgeschrägten hervorstehenden Laminate (32) vom zweiten Blattsegment (20) hervorragen, wobei die einen oder mehrere abgeschrägten Laminatschuhe zum Aufnehmen der einen oder mehrere abgeschrägten hervorstehenden Laminate konfiguriert sind, und, wenn das segmentierte Windturbinenblatt vor Ort montiert wird, die einen oder mehrere abgeschrägten Laminatschuhe und die einen oder mehrere abgeschrägten hervorstehenden Laminate miteinander verbunden sind, so dass das erste Blattsegment mit dem zweiten Blattsegment zusammengebaut wird.

2. Gelenk nach Anspruch 1, wobei jeder der einen oder mehrere abgeschrägten Laminatschuhe ein äußeres Schuhelamiat (311) und ein inneres Schuhelamiat (312) hat, und jedes der einen oder mehrere abgeschrägten hervorstehenden Laminate sich zwischen dem äußeren Schuhelamiat und dem inneren Schuhelamiat befindet.

3. Gelenk nach Anspruch 2, wobei jedes der einen oder mehrere abgeschrägten hervorstehenden Laminate in einer Spannweitenrichtung (D1) des segmentierten Windturbinenblatts verjüngt ist und das äußere Schuhelamiat und das innere Schuhelamiat eine verjüngte Schuheöffnung (313) zur Aufnahme des verjüngten hervorstehenden Laminats bilden.

4. Gelenk nach Anspruch 1, wobei das Gelenk zwei der einen oder mehrere abgeschrägten Laminatschuhe umfasst, die jeweils auf einer Saugseite (SS) und einer Druckseite (PS) des ersten Blattsegments gebildet sind, und zwei der einen oder mehrere abgeschrägten hervorstehenden Laminate, die jeweils auf einer Saugseite (SS) und einer Druckseite (PS) des zweiten Blattsegments gebildet sind, und wobei die einen oder mehrere abgeschrägten Laminatschuhe auf der Saugseite zur Aufnahme der einen oder mehrere abgeschrägten hervorstehenden Laminate auf der Saugseite konfiguriert sind und die einen oder mehrere abgeschrägten Laminatschuhe auf der Druckseite zur Aufnahme der einen oder mehrere abgeschrägten hervorstehenden Laminate auf der Druckseite konfiguriert sind.

5. Gelenk nach Anspruch 1, wobei die einen oder mehrere abgeschrägten Laminatschuhe und die einen oder mehrere abgeschrägten hervorstehenden Laminate durch Klebstoff oder Harz verbunden sind; oder die einen oder mehrere abgeschrägten Laminatschuhe und die einen oder mehrere abgeschrägten hervorstehenden Laminate durch mechanische Befestigungselemente verbunden sind.

6. Segmentiertes Windturbinenblatt (100), umfassend: mindestens zwei Blattsegmente, die ein erstes Blattsegment (10) und ein zweites Blattsegment (20) umfassen; und ein oder mehrere Gelenke (30) zum Verbinden des ersten Blattsegments und des zweiten Blattsegments gemäß einem der Ansprüche 1-5.

7. Segmentierte Windturbinenblatt nach Anspruch 6, wobei das Gelenk an einer beliebigen gewünschten Position in Spannweitenrichtung des segmentierten Windturbinenblatts positioniert ist; oder das Gelenk an einer beliebigen gewünschten Position in Sehnenrichtung des segmentierten Windturbinenblatts positioniert ist; oder das Gelenk in einer beliebigen gewünschten Orientierung in einem Querschnitt des segmentierten Windturbinenblatts positioniert ist.

8. Verfahren zur Herstellung eines segmentierten Windturbinenblatts (100), wobei das segmentierte Windturbinenblatt mindestens ein erstes Blattsegment (10) und ein zweites Blattsegment (20) umfasst, das Verfahren die folgenden Schritte umfasst:
Einlegen (S11) einer oder mehrerer Materialschichten in eine Blattform, wobei die eine oder mehreren Materialschichten einen oder mehrere abgeschrägte Laminatschuhe (31) des ersten Blattsegments und einen oder mehrere abgeschrägte hervorstehende Laminate (32) des zweiten Blattsegments umfassen, wobei die einen oder mehrere abgeschrägten Laminatschuhe die einen oder mehrere abgeschrägten hervorstehenden Laminate aufnehmen, wobei die einen oder mehrere abgeschrägten Laminatschuhe (30) entlang einer Sehnenrichtung des ersten Blattsegments (10) angeordnet sind und sich die einen oder mehrere abgeschrägten Laminatschuhe (30) innerhalb des ersten Blattsegments (10) befinden und die einen oder mehrere abgeschrägten hervorstehenden Laminate (32) entlang der Sehnenrichtung des zweiten Blattsegments (20) angeordnet sind und die einen oder mehrere abgeschrägten hervorstehenden Laminate (32) vom zweiten Blattsegment (20) hervorragen;
Koinfusionieren (S12) der einen oder mehrerer Materialschichten in der Blattform, um ein einteiliges Windturbinenblatt zu bilden;
Entformen (S13) des einteiligen Windturbinenblatts aus der Blattform; und
Trennen (S14) der einen oder mehrerer abgeschrägten Laminatschuhe von den einen oder mehreren abgeschrägten hervorstehenden Laminaten, um das erste Blattsegment mit den einen oder mehreren abgeschrägten Laminatschuhen und das zweite Blattsegment mit den einen oder mehreren abgeschrägten hervorstehenden Laminaten zu bilden, sodass das segmentierte Windturbinenblatt gebildet wird und das erste Blattsegment und das zweite Blattsegment durch die Verbindung der einen oder mehreren abgeschrägten Laminatschuhe und der einen oder mehreren abgeschrägten hervorstehenden Laminate bei der Vor-Ort-Montage des segmentierten Windturbinenblatts wieder zusammengebaut werden können.

9. Verfahren nach Anspruch 8, wobei jeder der einen oder mehrere abgeschrägten Laminatschuhe ein äußeres Schuhelamiat (311) und ein inneres Schuhelamiat (312) hat, und sich jeder der einen oder mehrere abgeschrägten hervorstehenden Laminate zwischen dem äußeren Schuhelamiat und dem inneren Schuhelamiat befindet.

10. Verfahren nach Anspruch 9, wobei das Einlegen (S11) der einen oder mehrerer Materialschichten umfasst: Wickeln des inneren Schuhelamiats (312) um jedes der einen oder mehrerer abgeschrägten hervorstehenden Laminate (32) vor dem Koinfusionieren.

11. Verfahren nach Anspruch 8, umfassend ferner: Hinzufügen eines Verarbeitungmaterials zwischen jedem der einen oder mehrere abgeschrägten Laminatschuhe (31) und jedem der einen oder mehrerer abgeschrägten hervorstehenden Laminate (32), um die Demontage der einen oder mehrerer abgeschrägten Laminatschuhe und der einen oder mehreren abgeschrägten hervorstehenden Laminate während des Einlegens der einen oder mehreren Materialschichten zu erleichtern; oder Hinzufügen eines Verarbeitungmaterials zwischen jedem der einen oder mehrere abgeschrägten Laminatschuhe (31) und jedem der einen oder mehreren abgeschrägten hervorstehenden Laminate (32), um die Demontage der einen oder mehrerer abgeschrägten Laminatschuhe und der einen oder mehreren abgeschrägten hervorstehenden Laminate während des Einlegens der einen oder mehreren Materialschichten zu erleichtern; und Abdecken jedes der einen oder mehreren abgeschrägten hervorstehenden Laminate mit dem Verarbeitungmaterial.

12. Verfahren nach Anspruch 11, umfassend ferner: Entfernen des Verarbeitungmaterials von jedem der einen oder mehreren abgeschrägten hervorstehenden Laminate (32) vor der Wiederzusammenbau.

13. Verfahren nach Anspruch 8, wobei die Blattform zwei Formhälften umfasst, wobei das Einlegen der einen oder mehreren Materialschichten in die Blattform und das Koinfusionieren der einen oder mehreren Materialschichten zusammen in der Blattform umfassen: Einlegen und Koinfusionieren der einen oder mehrerer Materialschichten jeweils in den zwei Formhälften, um jeweils eine Saugnapfschale und eine Druckseitenschale zu bilden, wobei die einen oder mehrere abgeschrägten Laminatschuhe und die einen oder mehrere abgeschrägten hervorstehenden Laminate in jede der beiden Formhälften gelegt werden.

14. Verfahren nach Anspruch 13, umfassend ferner: Schließen der beiden Formhälften; und Zusammenbauen der Saugnapfschale und der Druckseitenschale, um das einteilige Windturbinenblatt zu bilden.

15. Verfahren nach Anspruch 8, wobei das Koinfusionieren der einen oder mehreren Materialschichten zusammen in der Blattform umfasst: Koinfusionieren der einen oder mehreren Materialschichten zusammen mit einem flüssigen Harz in der Blattform, um die eine oder mehreren Materialschichten zu härten.

## Revendications

1. Un joint (30) pour une pale de turbine éolienne segmentée (100) comprenant : une ou plusieurs manches de stratifié biseautés (31) formés de manière intégrée sur un premier segment de pale (10) de la pale de turbine éolienne segmentée, où ladite ou lesdites manches de stratifié biseautés (30) sont disposés le long d'une direction de corde du premier segment de pale (10) et ladite ou lesdites manches de stratifié biseautés (30) sont à l'intérieur du premier segment de pale (10) ; et un ou plusieurs stratifiés saillants biseautés (32) formés de manière intégrée sur un second segment de pale (20) de la pale de turbine éolienne segmentée, où ledit ou lesdits stratifiés saillants biseautés (32) sont disposés le long de la direction de corde du second segment de pale (20) et lesdits stratifiés saillants biseautés (32) dépassent du second segment de pale (20), où ladite ou lesdites manches de stratifié biseautés sont configurés pour loger ledit ou lesdits stratifiés saillants biseautés et, lorsque la pale de turbine éolienne segmentée est assemblée sur site, ladite ou lesdites manches de stratifié biseautés et ledit ou lesdits stratifiés saillants biseautés sont connectés ensemble de sorte que le premier segment de pale est assemblé avec le second segment de pale.

2. Le joint selon la revendication 1, dans lequel chacun de ladite ou desdites manches de stratifié biseautés a un stratifié de manche externe (311) et un stratifié de manche interne (312), et chacun dudit ou desdits stratifiés saillants biseautés est situé entre le stratifié de manche externe et le stratifié de manche interne.

3. Le joint selon la revendication 2, dans lequel chacun dudit ou desdits stratifiés saillants biseautés est effilé dans une direction envergure (D1) de la pale de turbine éolienne segmentée, et le stratifié de manche externe et le stratifié de manche interne forment une ouverture de manche effilée (313) pour loger le stratifié saillant effilé.

4. Le joint selon la revendication 1, dans lequel le joint comprend deux de ladite ou desdites manches de stratifié biseautés, respectivement formés sur un côté aspiration (SS) et un côté pression (PS) du premier segment de pale, et deux dudit ou desdits stratifiés saillants biseautés, respectivement formés sur un côté aspiration (SS) et un côté pression (PS) du second segment de pale, et dans lequel ladite ou lesdites manches de stratifié biseautés sur le côté aspiration sont configurés pour loger ledit ou lesdits stratifiés saillants biseautés sur le côté aspiration, et ladite ou lesdites manches de stratifié biseautés sur le côté pression sont configurés pour loger ledit ou lesdits stratifiés saillants biseautés sur le côté pression.

5. Le joint selon la revendication 1, dans lequel ladite ou lesdites manches de stratifié biseautés et ledit ou lesdits stratifiés saillants biseautés sont connectés par adhésif ou résine ; ou ladite ou lesdites manches de stratifié biseautés et ledit ou lesdits stratifiés saillants biseautés sont connectés par des fixations mécaniques.

6. Une pale de turbine éolienne segmentée (100) comprenant : au moins deux segments de pale comprenant un premier segment de pale (10) et un second segment de pale (20) ; et un ou plusieurs joints (30) pour connecter le premier segment de pale et le second segment de pale selon l'une quelconque des revendications 1 à 5.

7. La pale de turbine éolienne segmentée selon la revendication 6, dans laquelle le joint est positionné à n'importe quelle position envergure souhaitée de la pale de turbine éolienne segmentée ; ou le joint est positionné à n'importe quelle position de corde souhaitée de la pale de turbine éolienne segmentée ; ou le joint est positionné dans n'importe quelle orientation souhaitée dans une section transversale de la pale de turbine éolienne segmentée.

8. Un procédé de fabrication d'une pale de turbine éolienne segmentée (100), la pale de turbine éolienne segmentée comprenant au moins un premier segment de pale (10) et un second segment de pale (20), le procédé comprenant les étapes suivantes : disposition (S11) d'une ou plusieurs couches de matériau dans un moule de pale, ladite ou lesdites couches de matériau comprenant une ou plusieurs manches de stratifié biseautés (31) du premier segment de pale et un ou plusieurs stratifiés saillants biseautés (32) du second segment de pale, ladite ou lesdites manches de stratifié biseautés logeant ledit ou lesdits stratifiés saillants biseautés, dans lequel ladite ou lesdites manches de stratifié biseautés (30) étant disposés le long d'une direction de corde du premier segment de pale (10) et ladite ou lesdites manches de stratifié biseautés (30) étant à l'intérieur du premier segment de pale (10), et ledit ou lesdits stratifiés saillants biseautés (32) étant disposés le long de la direction de corde du second segment de pale (20), et ledit ou lesdits stratifiés saillants biseautés (32) dépassant du second segment de pale (20) ; co-infusion (S12) de ladite ou desdites couches de matériau ensemble dans le moule de pale afin de former une pale de turbine éolienne monobloc ; démoulage (S13) de la pale de turbine éolienne monobloc du moule de pale ; et séparation (S14) de ladite ou desdites manches de stratifié biseautés dudit ou desdits stratifiés saillants biseautés pour former le premier segment de pale avec ladite ou lesdites manches de stratifié biseautés et le second segment de pale avec ledit ou lesdits stratifiés saillants biseautés, de sorte que la pale de turbine éolienne segmentée est formée et que le premier segment de pale et le second segment de pale peuvent être réassemblés ensemble par connexion de ladite ou desdites manches de stratifié biseautés et dudit ou desdits stratifiés saillants biseautés lorsque la pale de turbine éolienne segmentée est assemblée sur site.

9. Le procédé selon la revendication 8, dans lequel chacun de ladite ou desdites manches de stratifié biseautés a un stratifié de manche externe (311) et un stratifié de manche interne (312), et chacun dudit ou desdits stratifiés saillants biseautés est situé entre le stratifié de manche externe et le stratifié de manche interne.

10. Le procédé selon la revendication 9, dans lequel la disposition (S11) de ladite ou desdites couches de matériau comprend : l'enroulement du stratifié de manche interne (312) autour de chacun dudit ou desdits stratifiés saillants biseautés (32) avant la co-infusion.

11. Le procédé selon la revendication 8, comprenant en outre : l'ajout entre chacun de ladite ou desdites manches de stratifié biseautés (31) et chacun des stratifiés saillants biseautés (32) d'un matériau de traitement pour faciliter le démontage de ladite ou desdites manches de stratifié biseautés et dudit ou desdits stratifiés saillants biseautés lors de la disposition de ladite ou desdites couches de matériau ; ou l'ajout entre chacun de ladite ou desdites manches de stratifié biseautés (31) et chacun dudit ou desdits stratifiés saillants biseautés (32), d'un matériau de traitement pour faciliter le démontage de ladite ou desdites manches de stratifié biseautés et dudit ou desdits stratifiés saillants biseautés lors de la disposition de ladite ou desdites couches de matériau et le recouvrement de chacun dudit ou desdits stratifiés saillants biseautés avec le matériau de traitement.

12. Le procédé selon la revendication 11, comprenant en outre : l'élimination du matériau de traitement de chacun dudit ou desdits stratifiés saillants biseautés (32) avant le réassemblage.

13. Le procédé selon la revendication 8, dans lequel le moule de pale comprend deux moitiés de moule, et la disposition de ladite ou desdites couches de matériau dans le moule de pale et la co-infusion de ladite ou desdites couches de matériau ensemble dans le moule de pale comprend : la disposition et la co-infusion de ladite ou desdites couches de matériau respectivement dans les deux moitiés de moule afin de former une coque de pale côté aspiration et une coque de pale côté pression respectivement, dans lequel ladite ou lesdites manches de stratifié biseautés et ledit ou lesdits stratifiés saillants biseautés étant placés dans chacune des deux moitiés de moule.

14. Le procédé selon la revendication 13, comprenant en outre : la fermeture des deux moitiés de moule ; et l'assemblage de la coque de pale côté aspiration et de la coque de pale côté pression ensemble pour former la pale de turbine éolienne monobloc.

15. Le procédé selon la revendication 8, dans lequel la co-infusion de ladite ou desdites couches de matériau ensemble dans le moule de pale comprend : la co-infusion de ladite ou desdites couches de matériau ensemble avec une résine liquide dans le moule de pale afin de durcir ladite ou lesdites couches de matériau.
